# DEMANDE DE BREVET EUROPEEN

(11) **EP 0 600 818 A1**
(43) Date de publication de la demande: **08.06.1994**
(21) Numéro de dépôt: 93480203.4
(22) Date de dépôt: 29.11.1993
(51) Int. Cl.: B60R 21/12, G07C 5/08, G07B 13/00

(54) **Système d'enregistrement d'incidents dans un véhicule de transport public de personnes**

(30) Priorité: 30.11.1992 FR 9214607
(71) Demandeur: SOCIETE D'ETUDES ET DE REALISATIONS ELECTROTECHNIQUES ET ELECTRONIQUES SEREL FRANCE Société anonyme, F-06200 Nice (FR)
(72) Inventeur: Garrandes, Michel, F-06100 Nice (FR)
(74) Mandataire: Bonneau, Gérard Cabinet Bonneau Conseil en Propriété Industrielle

(57) **Abrégé**

L'invention concerne un système de sécurité pour véhicule de transport de personnes tel qu'un taxi comprenant une caméra (10) de prise d'images des personnes transportées, un dispositif de traitement de données (14) connecté à la caméra et comportant un microcontrôleur et une mémoire destinée à enregistrer les images en provenance de la caméra sous le contrôle du microcontrôleur, un clavier (16) d'entrée de code confidentiel et un commutateur (18) tous deux connectés au dispositif de traitement de données, le commutateur assurant la commande de la mise en route du système après qu'un code confidentiel a été entré au moyen du clavier (16) de sorte qu'une ou plusieurs images des personnes transportées soient enregistrées et puissent ensuite être restituées, soit localement à l'aide d'un moniteur local (22), soit à distance aprèe transmission grâce à un émetteur-récepteur radio (24) ou un radiotéléphone, afin de fournir une identification des personnes en cas d'incident tel qu'une agression du conducteur de taxi.

## Description

La présente invention concerne un système de sécurité pour véhicule de transport public de personnes tel qu'un taxi et plus particulièrement un système de sécurité permettant d'enregistrer des images des personnes transportées de façon à pouvoir les identifier après un incident tel qu'une agression du conducteur du véhicule.

Les conducteurs des véhicules de transport public tels que les taxis, ou autobus sont exposés à des agressions de la part des passagers qu'ils transportent souvent dans le but de voler les recettes de la journée.

Mais les agressions ne se limitent pas forcement au désir de voler la recette du conducteur. Ainsi dans un véhicule de transport en commun tel qu'un autobus, un train, le métro, des agressions peuvent avoir lieu dans le but de dévaliser les passagers du véhicule.

Il est souvent difficile, après qu'une agression s'est produite dans un taxi ou autre véhicule de transport de retrouver les malfaiteurs que le conducteur n'a pas pu ou n'a pas eu le temps de mémoriser de façon à être en mesure de les identifier par la suite. C'est pourquoi il existe actuellement un besoin de pouvoir identifier à posteriori et de façon fiable et efficace les personnes transportées dans un taxi ou autre véhicule de transport, sans créer de perturbation lors du transport.

Le but de l'invention est donc de réaliser un système de sécurité pour véhicule de transport tel qu'un taxi, qui permette un enregistrement d'images des personnes transportées pouvant permettre l'identification de ces personnes après un incident tel qu'une agression sur le conducteur du véhicule.

Par conséquent, l'objet de l'invention est un système de sécurité pour véhicule de transport public de personnes, notamment un taxi, comprenant une caméra de prise d'images des personnes transportées, un dispositif de traitement de données connecté à la caméra et comportant un microcontrôleur et une mémoire destinée à enregistrer les images en provenance de la caméra sous le contrôle du microcontrôleur, un dispositif d'entrée de code confidentiel et un commutateur tous deux connectés au dispositif de traitement de données, le commutateur assurant la commande de la mise en route du système après qu'un code confidentiel est entré au clavier, de sorte qu'une ou plusieurs images des personnes transportées soient enregistrées dans la mémoire.

Les buts, objets et caractéristiques de la présente invention apparaîtront mieux à la lecture de la description qui suit d'un mode de réalisation préféré de l'invention faite en référence aux dessins où:
la figure 1 est une représentation schématique montrant les différents éléments du système selon l'invention et
la figure 2 est une représentation synoptique d'un mode de réalisation préféré du système de sécurité selon l'invention.

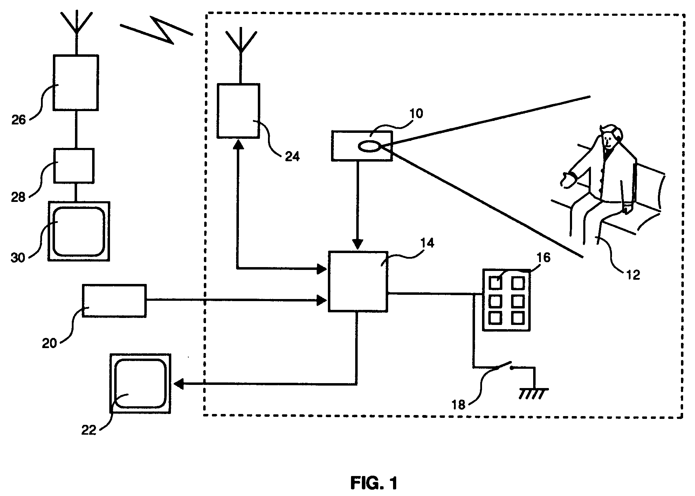

Le système illustré schématiquement sur la figure 1 peut être utilisé dans un taxi de préférence, mais également dans un autobus ou autre véhicule de transport. Il comprend une caméra (10) chargée de la prise d'images des personnes transportées (12), placée dans un endroit n'entraînant aucune gêne pour celle-ci. Cette caméra doit être installée en partie haute ou en tout point à partir duquel le champ de vision de l'objectif permet de visualiser les passagers assis à l'arrière du taxi ou aux emplacements proches du conducteur pour un véhicule de transport en commun. Le rétroviseur est un emplacement adéquat pour y placer la caméra. Cette dernière devant être de taille réduite, un capteur vidéo miniature comprenant l'objectif, le capteur CCD (dispositif à transfert de charge) et les diodes infrarouges pour renforcer la visibilité des images dans des conditions de faible éclairement, constitue une caméra appropriée.

La camera (12) est connectée à un dispositif de traitement de données 14 qui contrôle l'enregistrement des images en provenance de la caméra dans une mémoire vive (RAM).

La mise en route du système est effectué par le conducteur qui compose son code confidentiel sur le dispositif d'entrée de code 16, en combinaison avec la fermeture du commutateur 18. Ce dernier peut être fermé par exemple lorsque le conducteur met en marche son taximètre après la prise en charge des clients.

Si l'on veut une restitution des images enregistrées par exemple après qu'une agression a eu lieu de façon à identifier les auteurs de l'agression, la lecture peut se faire soit localement soit à distance. Localement la restitution des images a lieu grâce à un équipement portable comprenant une commande (20) à code servant également de décodeur, qui peut être du type télécommande de poste de télévision, et un moniteur de visualisation avec écran vidéo 22.

L'équipement pour lecture à distance des images enregistrées est du type émetteur-récepteur radio. Pour ce faire, un émetteur-récepteur radio 24 est connecté au dispositif de traitement de données 14. La lecture se fait alors au moyen d'un émetteur-récepteur radio 26 situé à distance. Les signaux numériques sont décodés par un décodeur 28 à la sortie de l'émetteur-récepteur et les images sont affichées sur le moniteur de télévision 30. Le système d'émission/réception composé des éléments 24 et 26 peut aussi être un radiotéléphone.

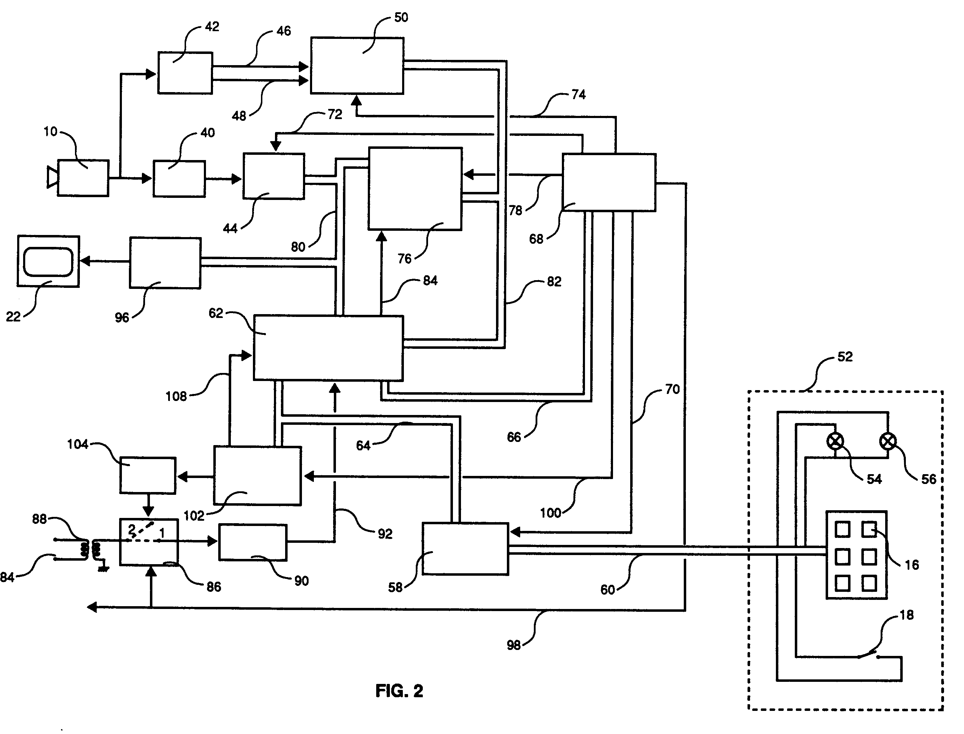

Un mode de réalisation préféré du système de l'invention et principalement du dispositif de traitement de données, est illustré schématiquement sur la figure 2. La caméra 10 est mise en état de fonctionnement, par exemple au début de la journée, par un contact marche/arrêt non représenté. A partir de cette mise en marche, les signaux analogiques ou provenance de la caméra 10 sont fournis d'une part à un amplificateur 40 et un circuit de synchronisation 42. Les signaux analogiques amplifiés sont transmis continuellement à un convertisseur analogique/numérique 44 en même temps que le circuit de synchronisation 42 fournit sur ses sorties 46 et 48 respectivement la synchronisation ligne et la synchronisation trame à un générateur d'adresses 50. Aussi bien le convertisseur analogique/numérique 44 que le générateur d'adresse 50 sont rendus actifs qu'à certains moments comme on va le voir maintenant.

### Mode enregistrement

Comme on l'a mentionné précédemment, la mise en route du système s'effectue par l'ensemble en pointillés 52 à la disposition du conducteur. Tout d'abord, le conducteur compose son code confidentiel sur le dispositif d'entrée de code 16. Le code est transmis vers une interface 58 sous forme de mots à plusieurs bits au moyen du bus 60. Un dispositif de voyants lumineux formés de 2 diodes électroluminescentes (LED) 54 et 56 permet de voir si le système est déverrouillé. Par exemple, lorsque la LED 54 est allumée et la LED 56 éteinte, le système est verrouillé. Dès que le conducteur a introduit son code confidentiel, la LED 54 s'éteint et la LED 56 s'allume, indiquant que le système est armé. A ce moment, la fermeture du contact 18 est nécessaire pour lancer l'enregistrement des images par la caméra 10. Cette fermeture de contact peut être réalisée lorsque le conducteur met en marche son taximètre après la prise en charge de clients. Mais cette fermeture peut également être réalisée par d'autres moyens. Ainsi, elle peut être liée à la fermeture des portières arrières lorsque les clients montent dans le taxi; Cette dernière solution présente une sécurité de fonctionnement plus grande dans la mesure où le conducteur pourrait subir une agression avant d'avoir pu manoeuvrer son taximètre.

Il est à noter que le bus 60 comprend les lignes correspondant aux bits transmis en réponse à chaque chiffre du clavier 16, mais également les deux lignes d'activation des LED 54 et 56 et les lignes en provenance du contact 18. Le bus 60 a donc une largeur de 6 à 7 bits.

Lorsque le mot de code confidentiel en provenance du clavier 16 est reçu par l'interface 58, celle-ci procède à la remise en forme des signaux et avertit le microcontrôleur au moyen du bus 64. Le microcontrôleur 62 interrompu par l'interface 58, transmet un mot de commande par exemple de 4 bits de lecture d'interface sur un bus de commande 66 à destination du circuit décodeur 68. En réponse à ce mot de commande, le circuit décodeur 68 envoie un signal de commande d'interface sur la ligne 70 à l'interface 58 dans le but de transmettre le code confidentiel mis en forme par l'interface.

Dès que la fermeture du contact 18 a été reconnue par le microcontrôleur 62, ce dernier met en route une séquence programmée de prise de vues par la camera 10. Cette séquence peut être quelconque de façon à prendre une dizaine d'images de la banquette arrière du taxi occupée par les clients. On peut par exemple prévoir de prendre une image à intervalles réguliers (environ 1 mn) jusqu'à ce que 10 images soient prises, ou encore prendre des images rapprochées au début de la course et augmenter ensuite l'intervalle entre les prises de vues. Il est possible également de prévoir que le déclenchement des prises d'images soit dû à une impulsion sur une touche de clavier 16.

Chaque fois qu'une image doit être prise conformément à la séquence programmée du microcontrôleur 62, ce dernier transmet un mot de commande au circuit décodeur 68. Le circuit décodeur 68 envoie alors un signal de commande de conversion au convertisseur analogique/numérique 44 par la ligne 72, un signal de commande d'adressage au générateur d'adresses 50 par la ligne 74, et un signal de commande d'enregistrement mémoire à une mémoire vive du type RAM 76 chargée de mémoriser les différents plans mémoires pris par la caméra 10 par la ligne 78. A ce moment là, les signaux numériques d'images fournis sous forme de mots de données (en général 6 bits) par le convertisseur 44 sur le bus de données 80, sont enregistrés en mémoire 76 à des emplacements dont les adresses sont fournies par le générateur d'adresses 50 sur le bus d'adressage 82 (d'une largeur de 16 bits), l'autorisation d'écriture en mémoire étant fourni par la ligne W/R provenant du microcontrôleur 62.

### Mode lecture

la lecture des images ou plans-mémoires enregistrés dans la mémoire RAM 76 peut se faire soit localement, soit à distance. Dans les deux cas, le système attend un ordre de transmission vidéo sur l'entrée/sortie 84. Cette commande qui comporte un code confidentiel reconnu par le système, peut donc soit provenir d'une commande locale 20 (voir figure 1) soit d'une commande d'un poste central au moyen d'une liaison radio ou radio téléphonique. L'entrée/sortie 84 est connectée à un commutateur-sélecteur 86 par l'intermédiaire d'un transformateur de découplage 88 nécessaire lorsque la liaison avec l'extérieur se fait au moyen d'une liaison radiotéléphonique. Au repos, le commutateur-sélecteur 86 est en position 1, ce qui fait que le signal de commande de lecture est transmis, via 86, à un modem 90 ayant pour fonction de démoduler le signal analogique reçu en signal numérique. Le signal numérique obtenu est alors transmis au microcontrôleur 62 au moyen de la ligne 92.

Si la lecture des images est faite localement, un moniteur vidéo 22 est connecté sur le bus de données 80 par l'intermédiaire d'un convertisseur numérique/analogique 96.

Si la lecture des images doit se faire à distance, le microcontrôleur qui a reçu un code de commande d'un poste central éloigné, envoie un mot de commande au décodeur 68 au moyen du bus 66. Après décodage, le décodeur 68 transmet deux signaux de commande sur les lignes 98 et 100. Le signal de commande sur la ligne 98 a pour fonction de basculer le commutateur-sélecteur 86 en position 2 (position d'émission), et le signal de commande sur la ligne 100 a pour fonction d'activer un générateur de sinus 102.

En mode de lecture par un poste central éloigné, la lecture s'effectue de la façon suivante. le microcontrôleur 62 va chercher dans la mémoire RAM 76 la valeur d'un pixel de l'image à transmettre, au moyen de la commande W/R sur la ligne 84 et du bus de données 80. Le mot représentant le pixel est transmis au générateur de sinus 102 où il est transformé en un signal de fréquence correspondant au niveau de gris du pixel (il faut prévoir 64 niveaux de gris correspondant à 64 fréquences comprises par exemple entre 2000 et 3000 hz. Le signal ,de fréquence, après amplification dans un circuit d'amplification et de filtrage 104 qui amplifie le signal et le met en forme sinusoïdale 104, est transmis sur l'entrée/sortie 84 par l'intermédiaire du transformateur 88. L'entrée/sortie 84 est connectée soit à un radiotéléphone, soit directement à un émetteur-récepteur radio. Pour ce faire le signal de commande a également pour fonction de commande la communication en alternat de la radio. Lorsque la période de transmission de la fréquence correspondant à un pixel est achevée, le générateur de sinus 102 avertit le microcontrôleur 62 par la ligne 106 qu'il peut transmettre un mot correspondant à un autre pixel. Cette séquence est ainsi répétée 65536 fois (256x 256 pixels) pour la transmission complète d'une image.

Il est à noter que, bien que le mode de réalisation représenté sur la figure 2 utilise la transmission par modulation de fréquence, tout autre mode de transmission pourrait être aussi bien utilisé, étant entendu que le générateur de sinus devrait être remplacé par un circuit adéquat dans le cas d'un mode de transmission différent.

Le système qui vient d'être décrit ne doit pas, bien entendu, être utilisé inconsidérément. C'est pourquoi, il est nécessaire qu'un code confidentiel soit entré pour la mise en marche du système. Dans le même ordre d'idées, une fois qu'un nombre donné d'images a été enregistré, le conducteur doit impérativement entrer à nouveau son code confidentiel pour réarmer le système tout en effaçant les images enregistrées lors du cycle précédent.

Le système selon l'invention peut recevoir des améliorations ou modifications à la portée de l'homme du métier. Ainsi, il est possible de prévoir une interconnexion du système avec l'installation d'alarme contre le vol du véhicule, permettant d'armer le système dès que l'on met en fonctionnement la centrale d'alarme. La transmission des images vers le poste central peut être automatiquement déclenchée par l'alarme en cas d'incident grave. De même, on peut prévoir un équipement de transmission d'un code d'alarme (correspondant au numéro minéralogique du véhicule) par voie radio sur une fréquence particulière, déclenché par le conducteur en cas d'incident grave, ce code étant reçu par les postes radiotéléphoniques situés dans un rayon de 4 à 500 m et équipés de récepteurs adéquats.

On voit donc que le système de l'invention apporte une meilleure protection des conducteurs ou pilotes en offrant une prévention et un effet dissuasif (pouvant être renforcé par des autocollants sur les vitres), un effet répressif par la lecture des images enregistrées à la suite d'un incident permettant de reconnaître les passagers et les circonstances dans lesquelles l'incident s'est produit, et une possibilité d'intervention plus rapide par la transmission des images vers un poste central.

## Revendications

1. Système de sécurité pour véhicule de transport public de personnes caractérisé en ce qu'il comprend une caméra (10) de prise d'images des personnes transportées, un dispositif de traitement de données (14) connecté à la caméra et comportant un microcontrôleur (62) et une mémoire (76) destinée à enregistrer les images en provenance de la caméra sous le contrôle dudit microcontrôleur, un dispositif d'entrée de code confidentiel (16) et un commutateur (18) tous deux connectés audit dispositif de traitement de données, le commutateur assurant la commande de la mise en route du système après qu'un code confidentiel a été entré au moyen dudit dispositif d'entrée de code, de sorte qu'une ou plusieurs images des personnes transportées soient enregistrées dans ladite mémoire et puissent ensuite être restituées afin de fournir une identification desdites personnes en cas d'incident tel qu'une agression du conducteur de véhicule de transport.

2. Système selon la revendication 1 caractérisé en ce que le véhicule de transport est un taxi et ledit commutateur (18) est fermé par la mise en route du taximètre par le conducteur de taxi.

3. Système selon la revendication 1 caractérisé en ce que le véhicule de transport est un taxi et ledit commutateur (18) est fermé par la fermeture des portières arrières lorsque les passagers ont pris place dans le taxi.

4. Système selon l'une des revendications 1, 2 ou 3 caractérisé en ce qu'il comporte en outre un moniteur de télévision (22) pour visionner sur place les images enregistrées dans ladite mémoire (76) du dispositif de traitement de données (14) en réponse à une commande locale (20), après qu'un incident s'est produit.

5. Système selon l'une quelconque des revendications 1 à 4 caractérisé en ce qu'il comporte en outre une entrée/sortie (84) pour la connexion à un dispositif émetteur/récepteur radio (24) ou un radiotéléphone, de façon à pouvoir commander à distance la transmission des images enregistrées dans ladite mémoire (76) du dispositif de traitement de données (14) et visionner lesdites images sur un moniteur de télévision, après qu'un incident s'est produit.

6. Système selon la revendication 4 ou 5 caractérisé en ce que ledit dispositif de traitement de données comporte en outre un générateur de sinus (102) fournissant une valeur de sinus en réponse à chaque valeur de pixel d'une image enregistrée dans ladite mémoire (76), de manière à transmettre les données d'enregistrement d'images par modulation de fréquence.

7. Système selon l'une quelconque des revendications précédentes caractérisé en ce que ledit code confidentiel doit être de nouveau entré au moyen dudit dispositif d'entrée de code (16) si on veut procéder à un nouvel enregistrement d'images après qu'un enregistrement d'images précédent a été complété.

8. Système selon la revendication 7 caractérisé en ce que ledit dispositif d'entrée de code (16) est un clavier, et un couple de voyants lumineux (54, 56) permet de s'assurer que le code confidentiel a été entré audit clavier.
